Europäisches Patentamt

European Patent Office

Office européen des brevets

(11) Publication number: 0 384 963 A2

# EUROPEAN PATENT APPLICATION

(21) Application number: 89120540.3

(51) Int. Cl.5: H04N 1/40, H04N 1/036

(22) Date of filing: 07.11.89

(30) Priority: 02.03.89 JP 50571/89

(43) Date of publication of application:
05.09.90 Bulletin 90/36

(84) Designated Contracting States:
DE GB NL

(71) Applicant: Kinoshita, Koichi
34-13, Nishi-Kusabuka-Cho
Shizuoka-Shi Shizuoka-Ken(JP)

(72) Inventor: Kinoshita, Koichi
34-13, Nishi-Kusabuka-Cho
Shizuoka-Shi Shizuoka-Ken(JP)

(74) Representative: Reichel, Wolfgang, Dipl.-Ing.
et al
Reichel und Reichel Parkstrasse 13
D-6000 Frankfurt am Main 1(DE)

(54) Apparatus for electrophotography representing half-tones.

(57) Apparatus for electrophotography representing half-tone comprises a photoconductor element on which a latent image having a high value of $\gamma$ of higher than 6 is to be formed, a source of laser beam, a driving circuit for driving the source of laser beam in accordance with a picture image information read out from a picture image memory device. In a lens system for projecting the lens beam onto the photoconductor element is included a concentration filter whose laser beam transmissibility decreases from its central portion toward peripheral portion. With this apparatus it is possible to readily represent the half-tone of the original picture image.

FIG. 9

EP 0 384 963 A2

## APPARATUS FOR ELECTROPHOTOGRAPHY REPRESENTING HALF-TONES

### BACKGROUND OF THE INVENTION

This invention relates to apparatus for electrophotography utilized as a printer, for example, and capable of readily representing half-tones of reproduced images.

In a prior art printer or a copier, for the purpose of representing the half-tone the diameter of a bright spot was reduced and the density of scanning lines was increased so as to increase the density of the picture elements.

However, when the diameter of the bright spot is reduced a physical problem of diffraction image occurs so that it has been necessary to obviate this problem. Especially, as the scan line density is increased the process speed lowers. To solve these problems various attempts have been tried for varying the diameter of the bright spot, but until today a satisfactory solution is not yet available.

### SUMMARY OF THE INVENTION

It is an object of this invention to provide a novel method and apparatus for electrophotography capable of readily representing the half-tone of the reproduced image.

According to this invention, there is provided apparatus for electrophotography representing the half-tone comprising a photoconductor element on which a latent image having a high value of $\gamma$ higher than 6 is to be formed, a source of laser beam, a driving circuit for driving the source of laser beam intensity in accordance with a picture image information, a lens system for projecting the laser beam on the surface of the photoconductor element, and means for providing a predetermined light quantity distribution in the bright spot of the laser beam projected upon the photoconductive element.

In practice, the predetermined light quantity distribution can be obtained by inserting a density filter in the path of the laser beam, having a laser beam transmissibility which decreases from the central portion toward the peripheral portion of the density filter and the laser beam is varied or modulated in accordance with a picture image information.

### BRIEF DESCRIPTION OF THE DRAWINGS

In the accompanying drawings:

Fig. 1 is a graph showing the photosensitive characteristic of a photoconductive member utilized in this invention;

Fig. 2 is a diagrammatic representation of a light quantity distribution of beam spots;

Fig. 3 is a diagrammatic cubic representation of the light quantity distribution of beam spots;

Fig. 4 is a graph showing the relation between the light output of a solid semiconductor laser device and applied voltage;

Fig. 5 shows projected bright spots where voltage impressed upon the laser device is varied;

Figs. 6a, 6b and 6c show examples of image patterns, latent image patterns formed on the surface of a photoconductor and laser drive voltage respectively, when three types of input voltage are used;

Fig. 7 is a graph showing a continuously varying half-tone;

Figs. 8a through 8d are diagrammatic cubic representations where light quantity distributions in the bright spots are changed variously;

Fig. 9 is a diagrammatic representation of an electrophotographic apparatus utilizing a semiconductor laser device as a light source; and

Fig. 10 is a graph showing the distribution of the light quantity in a bright spot.

### DESCRIPTION OF THE PREFERRED EMBODIMENTS

Preferred embodiments of this invention will now be described with reference to the accompanying drawings.

A first feature of this invention lies in that an extremely high value of $\gamma$ of a latent image formed on a photoconductor is used.

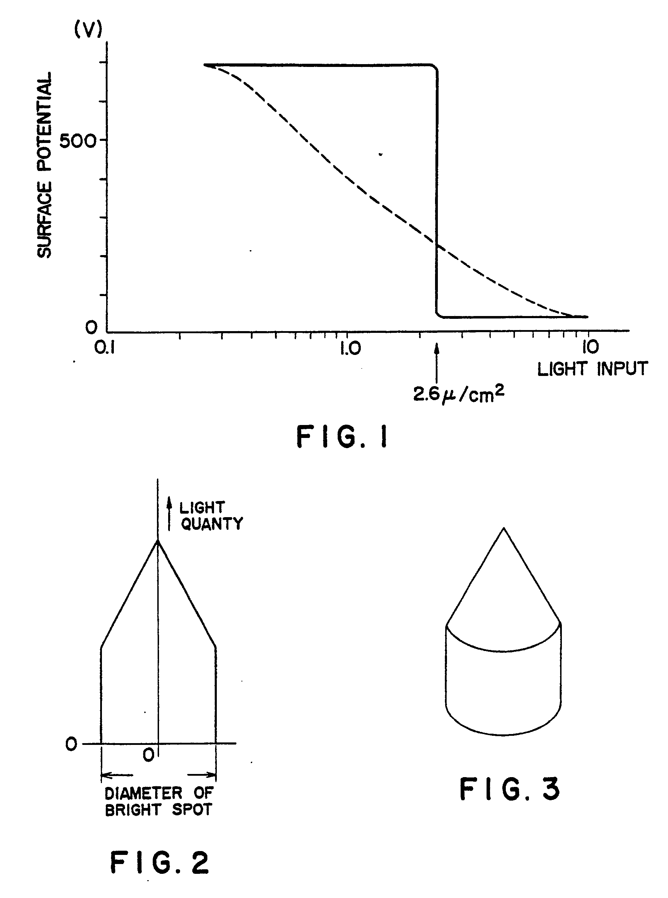

A solid line of Fig. 1 shows the photosensitive characteristic of a photoconductive member utilized in this invention. For comparison, a dotted line shows the photosensitive characteristic of a prior art selenium type photosensitive member.

A photoconductor member (hereinafter, designated by a reference numeral 5) utilized in this invention has a peculiar characteristic wherein the surface potential abruptly decreases when the light quantity imputted to the photoconductive member reaches a predetermined value. In other words, the photoconductive member performs ON and OFF operations before and after the predetermined light quantity (in this example, 2.6 $\mu$J/cm$^2$), thereby producing a latent image of extremely high value of $\gamma$, for example higher than 6. In contrast, the $\gamma$ of a conventional photoconductive member is at most 1 to 2.

The term $\gamma$ is used for a developed image of a conventional silver halide photography. Similar consideration may be used in the art of electrophotography. For the purpose of facilitating the description, $\gamma$ is herein defined as "the $\gamma$ of a latent image" for representing the steepness of the surface voltage of a latent image. A photoconductor having a high value of $\gamma$ of the latent image is suitable for representing a digital light input. A photoconductor member having a high $\gamma$ of the latent image and utilized in electrophotography can be prepared by the method disclosed in my copending patent application of European Patent Appln No. 88117830.

According to the method disclosed in this patent application, fine crystals of an intrinsic semiconductor or fine particles of an amorphous semiconductor each having a mean particle diameter of from 0.01 $\mu$ to 0.5 $\mu$ are admixed with a highly insulative binder having a volume specific resistivity of higher than 10$^{13}$ ohm·cm. A concrete composition will be described later. Here it is merely pointed out that the invention disclosed in my aforedescribed application uniquely utilize an Avalanche phenomenon that has not been used in a light receiving member.

A second feature of this invention lies in that a specific light quantity distribution is given in an image focusing plane of a laser beam spot projected upon the photoconductive member 5. Fig. 2 shows one example of this feature as well as a longitudinal section of a diagrammatic light quantity distribution for facilitating understanding of this feature, and Fig. 3 shows a cubic representation of Fig. 2.

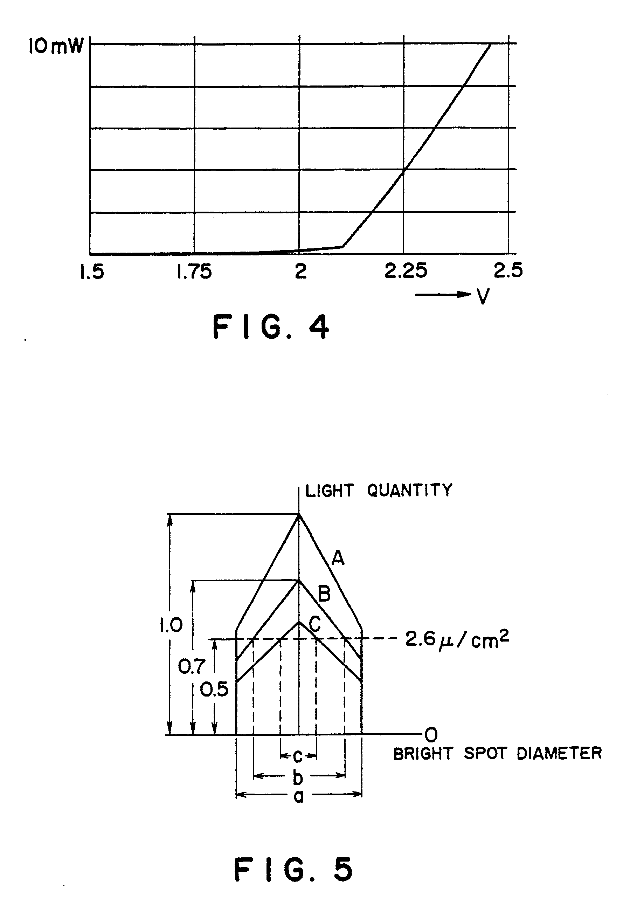

A third feature of this invention lies in that a laser output is modulated or varied in accordance with a picture image information. Fig. 4 is a graph showing the relationship between the light output of a solid semiconductor laser device and the applied voltage. As this figure clearly shows the quantity of the emitted light can be varied by controlling the applied voltage.

Fig. 5 shows a light quantity distribution of a projected bright spot when the applied voltage is varied, in which straight lines A, B and C show sections of light quantity distribution in the bright spot when the output light has values of about 100%, 70% and 50% respectively, whereas dotted vertical lines show rapid decrease in the surface potential of the photoconductive member illustrated in Fig. 1. At points in an area above a horizontal dotted line in Fig. 5, the surface potential of the photoconductive member decreases rapidly as illustrated in Fig. 5. In a case shown in Fig. 5, surface potential losing points or circles respectively having diameters a, b and c would be formed. In the example shown, A shows a case wherein light of 100% is emitted and B and C show cases wherein emitted lights are controlled to about 70% and 50% respectively. The area ratios of the surface potential losing points are about 1.0, 0.48 and 0.1 respectively.

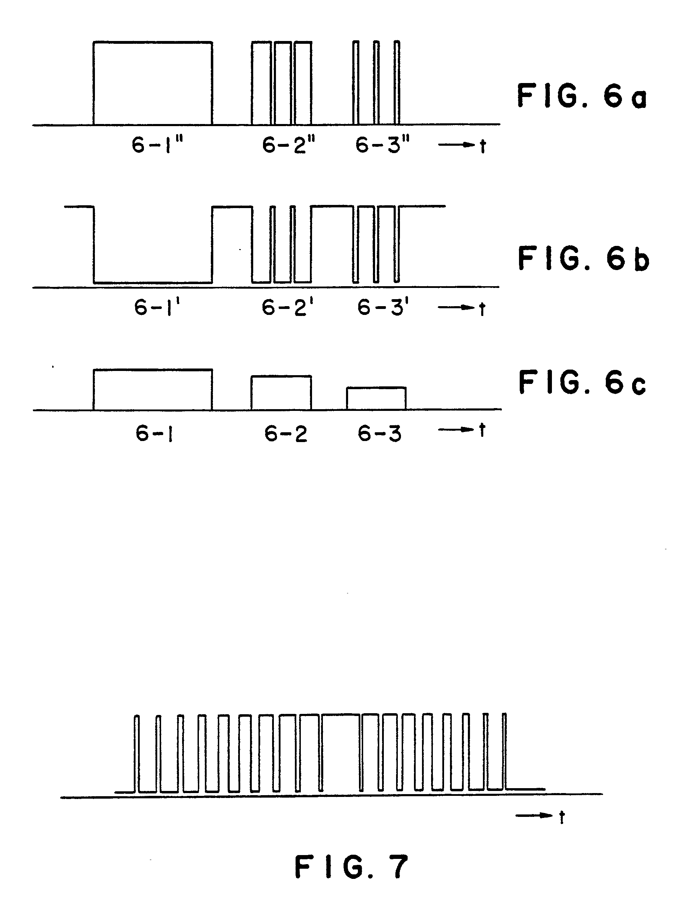

Figs. 6a, 6b and 6c show examples of patterns of latent images formed on the surface of the photoconductive member 5 when applied with three different voltages. 6-1, 6-2 and 6-3 in Fig. 6c show states of the input voltage, 6-1$'$, 6-2$'$ and 6-3$'$ in Fig. 6b show surface potentials respectively, and 6-1$''$, 6-2$''$ and 6-3$''$ in Fig. 6a respectively show developed states of the light image. As shown, the degree of blackness decreases in the order of 6-1$'$, 6-2$'$ and 6-3$'$.

Fig. 7 is a graph showing a continuously varying half-tone. Each one of Figs. 6a, 6b and 6c, and Fig. 7 is depicted with a single scanning beam similar to that used in a television camera.

As can be noted from the foregoing description, when the following three conditions are satisfied it becomes possible to precisely represent the half-tone of the picture image without decreasing the diameter of a bright spot or increasing the density of a scanning line.

(1) Using a photoconductive member having an extremely high value of $\gamma$ of a latent image that is $\gamma$ of higher than 6 (the $\gamma$ of prior art photoconductive members is usually 1 to 2).

(2) Giving a predetermined light quantity distribution to the bright spot of a laser beam.

(3) Varying the laser device output in accordance with a picture image information.

3

There are various means for facilitating the use of the electrophotographic method and apparatus. Examples of such means are as follows:

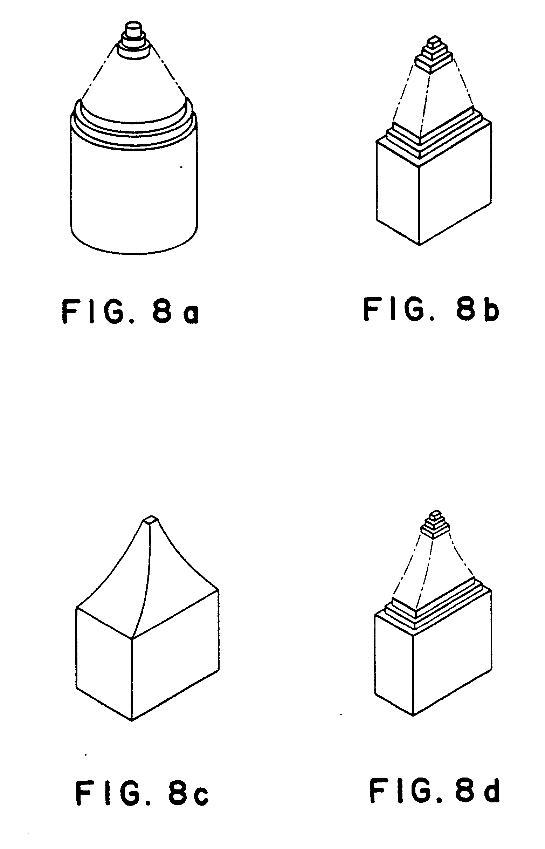

Figs. 8a-8d are cubic diagrammatic representations showing the states wherein the light quantity distribution in a bright spot is varied variously. More particularly, Fig. 8a shows a modification of Fig. 3, wherein the light quantity distribution is varied stepwisely. Fig. 8a shows the light quantity distribution necessary to accurately represent points in accordance with the levels of varying input voltages. Fig. 8b shows the light quantity distribution in the light spot in the form of a square dot. Fig. 8d shows a light quantity distribution for the laser device having an ample output intensity. Fig. 8c shows an example for continuous tone variation of a square dot. In Figs. 8b and 8d, unless the laser device has an ample output it is impossible to vary the light quantity distribution stepwisely. Fig. 8c shows a case wherein the light quantity distribution is varied in the form of a square dot with curved edges.

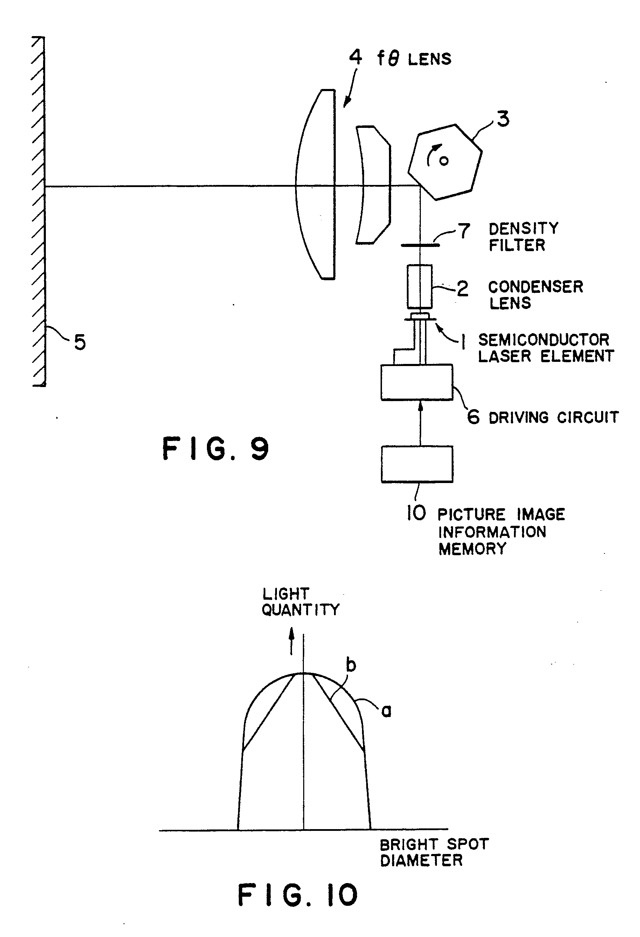

Fig. 9 is a connection diagram showing one example of an electrophotographic printing apparatus including means for providing a predetermined light quantity distribution in the bright spot of a laser beam projected on a photoconductive member 5 and means for varying as desired the quantity of light emitted by a semiconductor laser device.

More particularly, the electrophotographic printing apparatus shown in Fig. 9 comprises a semiconductor laser element 1 driven by a driving circuit 6, an optical system 2, for example a condenser lens, a rotating polygonal mirror 3, another optical system comprising a $f\theta$ lens, for example, where $f$ represents a focal length and $\theta$ a dispersion angle, a photoconductive member 5 projected with a laser beam through lens systems 2 and 4 and rotary mirror 3 and a density filter 7 having a predetermined density distribution and located in the output light path of the condenser lens 2.

According to one embodiment of this invention shown in Fig. 9, a memory device 10 storing picture image informations in the form of pulses is connected to the driving circuit 6 of the semiconductor laser element 1. The content of the memory device 10 is sequentially read out and supplied to control circuit 6. As a consequence, the strength of the laser beam emitted by the semiconductor laser element is varied or modified according to the picture image information stored in the memory device 10, whereby a latent image precisely corresponding to the picture image information can be formed on the surface of the photoconductive member 5. The treatment of the latent image, including sprinkling of a toner, transfer printing of a toner image and developing of the transfer printed toner image is the same as that of a conventional electrophotographic apparatus.

The density filter must be constructed such that a desired light quantity distribution can be obtained in the bright spot of the laser beam by taking into consideration the light quantity distribution inherent to a semiconductor laser light emitting element. The density filter 7 is constructed such that the quantity of light passing therethrough decreases from the central portion towards the peripheral portion. Since an optical system presently used in a laser light system is carefully designed by taking into consideration the importance of a wavefront aberration, even when the density filter 7 is inserted into a light path the density distribution of light spot would not be varied greatly in contrast to filter density distribution.

Since an ordinary laser beam has a Gauss distribution the peripheral portion has a smaller light quantity than a central portion so that the density filter can be prepared relatively readily. If the laser beam has an inherent light quantity Gauss distribution that is very close to the purpose of this invention, the object of this invention can be accomplished even when the filter is omitted.

A photosensitive member having a high value of $\gamma$ of a latent image and suitable for use in electrophotography has the following composition.

| | |
|---|---|
| $\alpha$ type copper phthalocyanine | 10.6 g |
| polyester resin (P-645, made by Mitsui Toatsu Co.) | 36.75 g |
| melamine resin (Uban 20-HS, made by Mitsui Toatsu Co.) | 13.8 g |
| cyclohexanone | 170 g |

After mixing together these components in a vibrating type mixer for 2 hours, the resulting mixture was coated on the surface of an aluminum cylinder having a diameter of 80 mm to form a photoconductor film having a dry thickness of 15 $\mu$ and coated mixture was dried at a temperature of 150° C for two hours in an atmosphere and then cooled to room temperature so as to obtain the photoconductor 5. When applied with a surface potential of 600 volts in a dark condition, and inputted with a laser beam of a wavelength of 780 $\mu$m at an intensity of about 24 $\mu$J/cm$^2$, a rapid light attenuation is observed, and the value of $\gamma$ of the latent image was reached to about 100 and the residual potential was found to be about 20 volts.

In a commercially available printer (having a process speed of 115 mm/sec., the diameter of the photosensitive member of 80 mm, and an average toner diameter of 7 $\mu$) the photoconductor 5 described above was substituted for the conventional SeAs type photoconductor. The output of the laser device was increased to 10 mW from 5 mW. The laser device used was the GaAlAs, PIN type wherein PIN means a photodetector self containing laser device.

The light quantity distribution in the bright spot was measured. It was found that the distribution substantially follows the Gauss distribution although the distribution was somewhat flat as shown by curve a in Fig. 10.

For modifying the light quantity distribution, the density filter 7 is provided. Curve b in Fig. 10 diagrammatically shows modified light quantity distribution.

The electrophotographic apparatus was operated using above described 10 mW laser device and the density filter 7. By varying the voltage applied to a laser diode in 7 steps of from 2.25 volts to 2.4 volts, spot images whose magnitude was varied in 7 stages were obtained, which means that it was succeeded to accurately develop or visualize dots of varying diameter by using a bright spot having the same diameter as that of a conventional bright spot.

Another advantage of this invention lies in that since a density filter is used, even though a minute spot image is formed, the problem of a diffraction image can be eliminated. Means having a predetermined light quantity distribution in a bright spot of a laser beam projected upon the photoconductive member and capable of varying as desired the light quantity emitted by the light source is not limited to that described above and any other suitable means can be used. For example, the function of the density filter 7 can be provided for a window of a laser element adapted to transmit a laser beam.

Where the light quantity of the laser beam is ample and the light quantity distribution in the step shaped bright points is predetermined, the value of $\gamma$ may be a little smaller than 6.

The advantages of this invention can be realized irrespective of the type of the laser light source. Thus a laser device other than a solid semiconductor laser device can also be used.

## Claims

1. Apparatus for electrophotography representing half-tone comprising:
a photoconductor element on which a latent image having a high value of $\gamma$ of higher than 6 is to be formed;
a source of laser beam;
a driving circuit for driving said source of laser beam in accordance with a picture image information;
a lens system for projecting said laser beam on a surface of said photoconductor element so as to form said latent image; and means for providing a predetermined light quantity distribution in a bright spot of said laser beam projected upon said photoconductive element.

2. The apparatus according to claim 1 further comprising picture image memory means connected to said drive circuit and storing a picture image information.

3. The apparatus according to claim 1 wherein said optical system comprises a density filter installed in a path of said laser beam, said density filter being constructed such that its laser beam transmissibility decreases from central portion toward peripheral portion of said density filter.

4. The apparatus according to claim 1 wherein said lens system comprises a condenser lens, a density filter, a rotary mirror and a $f\theta$ lens which are arranged in the order mentioned between said source of laser beam and said photoconductor element.

5. The apparatus according to claim 1 wherein said source of laser beam is made of a semiconductor.

6. The apparatus according to claim 1 wherein light quantity distribution of a bright spot of said laser beam projected upon said semiconductor member has a pyramidal configuration, a height thereof varies with voltage applied to said source of laser beam.

7. The apparatus according to claim 6 wherein said pyramidal configuration is stepped.

EP 0 384 963 A2

FIG. 1

FIG. 2

FIG. 3

10 mW

1.5     1.75     2     2.25     2.5

→ V

# FIG. 4

LIGHT QUANTITY

A

B

C

1.0

0.7

0.5

2.6 μ/cm²

O

c

b

a

BRIGHT SPOT DIAMETER

# FIG. 5

**FIG. 6a**

6-1"        6-2"        6-3"    ———▸ t

**FIG. 6b**

6-1'        6-2'        6-3'    ———▸ t

**FIG. 6c**

6-1        6-2        6-3    ———▸ t

———▸ t

**F I G. 7**

FIG. 8a

FIG. 8b

FIG. 8c

FIG. 8d

4 fθ LENS

3

7 DENSITY
FILTER

2 CONDENSER
LENS

1 SEMICONDUCTOR
LASER ELEMENT

6 DRIVING CIRCUIT

10 PICTURE IMAGE
INFORMATION
MEMORY

5

# FIG. 9

LIGHT
QUANTITY

b

a

BRIGHT SPOT
DIAMETER

# FIG. 10